Europäisches Patentamt

**European Patent Office**

Office européen des brevets

(19)

(11) Numéro de publication: **0 248 728**
**B1**

(12) **FASCICULE DE BREVET EUROPEEN**

(45) Date de publication du fascicule du brevet:
24.01.90

(21) Numéro de dépôt: 87401231.3

(22) Date de dépôt: 02.06.87

(51) Int. Cl.⁴: **F16L 55/12**, F16L 55/16,
F16L 13/14, F28F 11/00,
F28F 11/02

(54) **Procédé de fixation résistante et étanche d'un élément cylindrique creux à l'intérieur d'un tube et élément cylindrique pour la mise en oeuvre de ce procédé.**

(30) Priorité: 04.06.86 FR 8608065

(43) Date de publication de la demande:
09.12.87 Bulletin 87/50

(45) Mention de la délivrance du brevet:
24.01.90 Bulletin 90/4

(84) Etats contractants désignés:
BE CH DE ES FR GB IT LI SE

(56) Documents cités:
EP-A- 0 122 610
FR-A- 1 238 027
FR-A- 2 572 800
GB-A- 2 079 204

(73) Titulaire: FRAMATOME, Tour Fiat 1, Place de la Coupole,
F-92400 Courbevoie(FR)

(72) Inventeur: Cartry, Jean-Pierre, 117 Cours Gambetta,
F-69003 Lyon(FR)
Inventeur: Fraissenet, Bruno, 37 rue Imbert Colomes,
F-69001 Lyon(FR)

(74) Mandataire: Polus, Camille et al, c/o Cabinet
Lavoix 2, Place d'Estienne d'Orves, F-75441 Paris
Cedex 09(FR)

ACTORUM AG

## Description

L'invention concerne un procédé de fixation résistante et étanche d'un élément cylindrique creux à l'intérieur d'un tube et un élément cylindrique creux permettant la mise en oeuvre de ce procédé. L'invention s'applique notamment mais non exclusivement au chemisage et au bouchage des tubes d'un générateur de vapeur.

Les générateurs de vapeur des réacteurs nucléaires à eau sous pression comportent un faisceau constitué d'un très grand nombre de tubes dont les extrémités sont serties dans une plaque tubulaire de forte épaisseur.

Lors d'une utilisation de longue durée d'un tel générateur de vapeur, des fissures génétrices de fuite peuvent apparaître dans les parois de certains tubes du faisceau. Les parois des tubes réalisant la séparation entre le fluide primaire du réacteur et l'eau d'alimentation du générateur de vapeur, il est nécessaire de détecter ces fuites et d'y remédier par une intervention dans le générateur de vapeur, au moment d'un arrêt du réacteur nucléaire.

De telles interventions sont bien connues et font intervenir soit un bouchage de l'extrémité des tubes présentant une fuite, soit un chemisage de la partie fissurée de ces tubes.

Dans le cas du bouchage, on introduit dans l'extrémité du tube sertie dans la plaque tubulaire un élément cylindrique creux fermé à l'une de ses extrémités dont le diamètre extérieur est un peu inférieur au diamètre intérieur du tube dans sa partie sertie. On réalise ensuite une expansion diamètrale de cet élément cylindrique dans une zone de jonction proche de la face d'entrée de la plaque tubulaire, jusqu'au moment où la surface externe de l'élément cylindrique est parfaitement en contact avec la surface intérieure du tube. La fixation de l'élément cylindrique qui constitue le bouchon est complétée par un sertissage de sa partie ayant subi l'expansion diamètrale à l'intérieur du tube et éventuellement par un soudage de son extrémité assurant une fermeture parfaitement étanche du tube.

Dans le cas où l'on réalise un chemisage (voir FR-A 2 572 800), un élément cylindrique ou manchon, d'un diamètre extérieur inférieur au diamètre intérieur du tube et ouvert à ses deux extrémités, est introduit dans le tube à chemiser par la face d'entrée de la plaque tubulaire. La longueur du manchon est généralement supérieure à l'épaisseur de la plaque tubulaire et ce manchon est introduit dans le tube jusqu'au moment où son extrémité affleure l'extrémité du tube. L'autre extrémité du manchon est alors saillante par rapport à la face de sortie de la plaque tubulaire. Dans le cas d'un procédé de chemisage récemment développé et de préférence applicable aux tubes périphériques du générateur de vapeur, on utilise un manchon court d'une longueur sensiblement inférieure à l'épaisseur de la plaque tubulaire. Le manchon est introduit dans le tube de façon à être saillant d'un côté par rapport à la face de sortie de la plaque tubulaire. L'autre extrémité du manchon est alors située à l'intérieur de la partie du tube sertie dans la plaque tubulaire et dans une zone sensiblement éloignée de la face d'entrée.

Dans les deux cas, on effectue la fixation du manchon dans le tube par expansion diamètrale puis par sertissage de ce manchon dans deux zones voisines de ses extrémités. L'une de ces zones se trouve à l'intérieur de la plaque tubulaire et l'autre zone, au-delà de la face de sortie de cette plaque, dans une partie non sertie du tube.

Le sertissage dans cette zone située à l'extérieur de la plaque tubulaire est réalisé de façon que le manchon subisse une déformation plastique et le tube une déformation élastique uniquement. Le sertissage est donc assuré par les contraintes radiales d'origine élastique qui s'exercent dans le tube.

Aussi bien dans le cas du bouchage des tubes que dans le cas du chemisage, il est nécessaire d'effectuer un nettoyage poussé de la surface intérieure du tube et de la surface extérieure de l'élément cylindrique, dans les zones de jonction, pour obtenir une certaine étanchéité de ces jonctions. Le nettoyage de la surface interne du tube est une opération délicate et difficile à réaliser, surtout dans le cas d'un générateur de vapeur d'un réacteur nucléaire dont les tubes sont difficilement accessibles et qui présente une certaine radio-activité.

D'autre part, malgré un nettoyage poussé de cette surface interne, la jonction réalisée ultérieurement n'est pas toujours parfaitement étanche et il est souvent nécessaire de compléter l'intervention par une opération de soudage de l'extrémité du bouchon ou du manchon sur le tube.

Une telle opération de soudage peut entraîner des déformations ou des modifications structurales non souhaitables du tube.

On a proposé des bouchons ou des manchons comportant des gorges ou rainures sur leur surface externe. De tels usinages n'ont cependant qu'un effet très limité sur l'étanchéité de la jonction obtenue par sertissage du bouchon ou du manchon dans le tube, les parties saillantes du manchon dont la dureté est voisine de celle du tube venant s'écraser contre la surface interne du tube, lors du sertissage.

On a proposé également (FR-A-1.238.027), pour réaliser un accouplement de tubes placés bout à bout, en utilisant un manchon entourant les tubes dans leur zone de jonction, de placer un matériau d'étanchéité renfermant des particules dures entre le manchon et les tubes puis de comprimer le manchon sur les tubes, de façon que les particules dures viennent s'incruster dans le matériau des tubes. Un tel procédé n'est pas applicable dans le cas du chemisage ou du bouchage d'un tube de générateur de vapeur, puisqu'il nécessite l'utilisation d'un matériau d'étanchéité tel qu'un caoutchouc ou une matière plastique dans lequel les particules dures sont fixées.

Enfin, on a également proposé de réaliser le chemisage par soudage ou brasage du manchon à l'intérieur du tube. Une telle opération est extrêmement complexe et allonge considérablement le temps d'intervention dans le générateur de vapeur.

Le but de l'invention est donc de proposer un procédé de fixation résistante et étanche d'un élément cylindrique creux à l'intérieur d'un tube, par expansion diamètrale et sertissage de l'élément cylindrique dans le tube et incrustation dans le tube et l'élément cylindrique, au niveau de leur zone de jonction, d'au moins un élément en matériau dur intercalé entre le tube et l'élément cylindrique, par des opérations simples et rapides ne comportant pas de soudage de l'élément cylindrique sur le tube.

Dans ce but, on dispose autour de l'élément cylindrique dont le diamètre extérieur initial est inférieur au diamètre intérieur du tube et en contact avec sa surface externe, au moins un anneau en un matériau dont la dureté est supérieure à la dureté du tube et à celle de l'élément cylindrique, ayant une épaisseur inférieure à la différence entre le rayon intérieur du tube et le rayon extérieur initial de l'élément cylindrique,

- on introduit, l'élément cylindrique muni de l'anneau en matériau dur à l'intérieur du tube, de façon que l'anneau en matériau dur soit placé dans une partie du tube dans laquelle on réalise la fixation de l'élément cylindrique,

- et on réalise l'expansion puis le sertissage de l'élément cylindrique, au moins dans sa partie comportant l'anneau en matériau dur, de façon à incruster l'anneau en matériau dur à la fois dans l'élément cylindrique et le tube.

L'invention concerne également un élément cylindrique creux destiné à être fixé dans un tube comportant un anneau en matériau dur autour de sa surface externe.

Afin de bien faire comprendre l'invention, on va maintenant décrire, à titre d'exemples non limitatifs, plusieurs modes de réalisation du procédé suivant l'invention, dans le cas du manchonnage et dans le cas du bouchage d'un tube d'un générateur de vapeur.

La figure 1 est une vue en coupe de l'extrémité d'un élément cylindrique comportant un revêtement de matériau dur dans plusieurs zones annulaires.

La figure 2 est une vue en coupe de l'extrémité d'un tube de générateur de vapeur dans laquelle l'extrémité inférieure d'un manchon de chemisage a été fixée par le procédé suivant l'invention.

La figure 3 est une vue en coupe d'une partie d'un tube de générateur de vapeur, à l'extérieur de la plaque tubulaire, dans laquelle l'extrémité supérieure d'un manchon a été fixées par le procédé suivant l'invention.

La figure 4 est une vue en coupe de l'extrémité inférieure d'un tube de générateur de vapeur dans laquelle un bouchon a été fixé par le procédé suivant l'invention.

La figure 5 est une vue en coupe de l'extrémité d'un élément cylindrique suivant une première variante comportant trois bagues en matériau dur enfilées sur sa surface externe.

La figure 6 est une vue en coupe de l'extrémité d'un élément cylindrique suivant une seconde variante comportant une bague en matériau dur enfilée sur sa surface externe.

La figure 7 est une vue en coupe de l'extrémité d'un élément cylindrique selon une troisième variante.

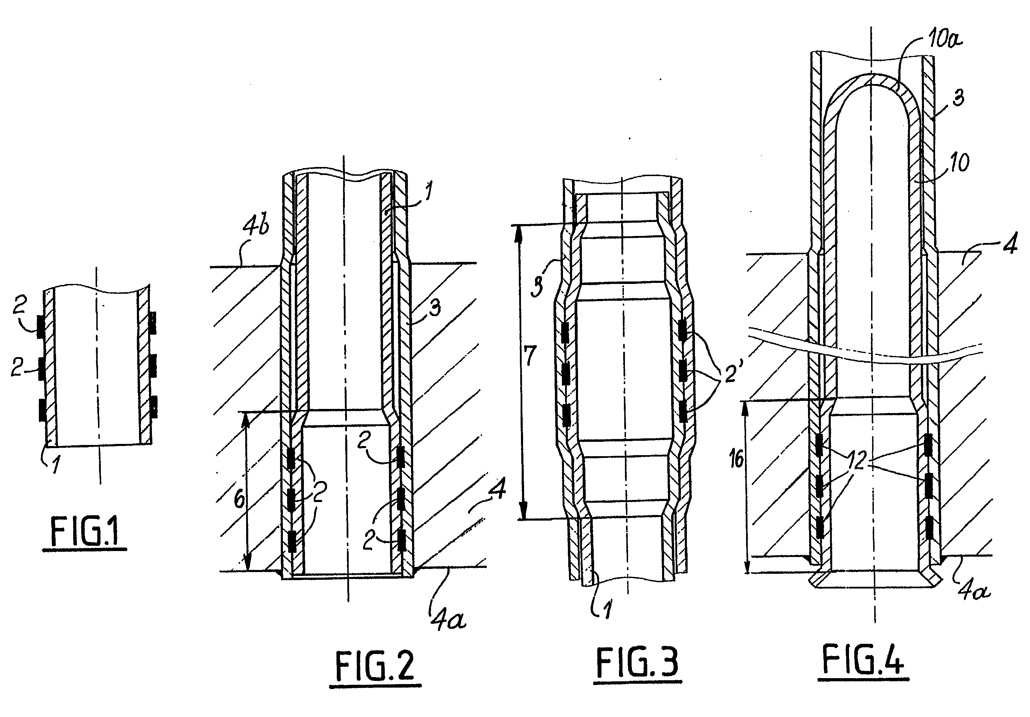

Sur la figure 1, on voit l'extrémité d'un manchon 1 permettant le chemisage d'un tube de générateur de vapeur. Ce manchon 1 comporte un diamètre extérieur un peu inférieur au diamètre intérieur du tube à chemiser. Pour un tube de générateur d'un réacteur nucléaire à eau sous pression dont le diamètre intérieur est un peu inférieur à 20 mm, on utilise, pour son chemisage, un manchon 1 dont le jeu radial dans le tube est de l'ordre de 0,2 mm.

Préalablement à l'introduction du manchon 1 dans le tube à chemiser, on dépose sur la surface extérieure de ce tube 1, dans trois zones annulaires successives voisines de l'extrémité du manchon, une couche de chrome 2 d'une épaisseur comprise entre 0,10 et 0,15 mm. Les dépôts de chrome 2 constituent ainsi trois anneaux entourant le manchon 1 au voisinage de son extrémité. Les anneaux de chrome 2 ont une largeur voisine de 4 mm et sont espacés les uns des autres par une distance du même ordre.

Le dépôt peut être effectué par un procédé électrolytique ou chimique bien connu pour réaliser des couches de chrome dur.

Les anneaux 2 ont une dureté supérieure à la dureté du manchon 1 qui est constitué par un alliage de nickel de la même nuance que celle du tube à réparer.

Trois anneaux de chrome analogues aux anneaux 2 sont également déposés au voisinage de l'autre extrémité du manchon 1 qui n'est pas visible sur la figure 1.

Sur la figure 2, on voit l'extrémité inférieure d'un tube 3 de générateur de vapeur sertie suivant toute la longueur d'un trou traversant la plaque tubulaire 4 du générateur, sur toute son épaisseur. Le tube 3 comportant une fissure dans sa paroi a été chemisé grâce à un manchon 1 tel que le manchon représenté sur la figure 1. Ce manchon 1 comporte trois anneaux de chrome 2 dans sa partie inférieure 6 correspondant à la partie du manchon 1 visible sur la figure 1 et par l'intermédiaire de laquelle est réalisée la fixation du manchon 1 dans le tube 3.

Cette partie inférieure 6 qui est légèrement pré-expansée par rapport à la partie courante du manchon 1 est introduite dans le tube 3 par la face d'entrée 4a de la plaque tubulaire. Cette introduction reste possible malgré la présence des anneaux de chrome, puisque l'épaisseur de ces anneaux est légèrement inférieure au jeu radial existant entre le manchon 1 et le tube 3, au moment de l'introduction du manchon. La pré-expansion de l'extrémité inférieure du manchon permet de compenser uniquement la diminution d'épaisseur du tube 3 due à son sertissage dans la plaque tubulaire 4.

Après introduction du manchon 1 dans le tube 3, dans sa position représentée sur la figure 2, on réalise une expansion diamétrale du manchon 1 dans sa partie inférieure 6, jusqu'au moment où les anneaux de chrome 2 viennent en prise avec la surface interne du tube 3.

En se reportant à la figure 3, on voit une partie du tube 3 située au-dessus de la face de sortie 4b de la plaque tubulaire 4, c'est-à-dire à l'extérieur de cette plaque tubulaire. La partie supérieure du manchon 1 qui se trouve placée dans cette partie du tube, à l'extérieur de la plaque tubulaire, comporte trois anneaux de chrome 2′ identiques aux anneaux 2 de la partie inférieure du manchon.

La zone supérieure 7 du manchon 1 subit une expansion diamètrale à l'intérieur du tube jusqu'au moment où les anneaux de chrome 2' viennent en prise avec la surface intérieure du tube 3.

Le manchon 1 est alors maintenu à l'intérieur du tube 3 aussi bien par sa partie inférieure 6 que par sa partie supérieure 7 dont on a réalisé l'expansion diamètrale à l'intérieur du tube.

Pour assurer la fixation complète du manchon 1 à l'intérieur du tube 3, on effectue ensuite un sertissage du manchon 1 à l'intérieur du tube 3, dans les zones 6 et 7 représentées sur les figures 2 et 3, respectivement. Pour cela, on introduit un dudgeon comportant des galets entraînés par une tige conique dans la manchon, au niveau des zones 6 et 7 successivement.

Comme il est visible sur les figures 2 et 3, au cours de l'opération de sertissage, les anneaux 2 et 2' viennent s'incruster à la fois dans la paroi du manchon 1 et dans la paroi du tube 3 qui sont en un alliage de nickel dont la dureté est inférieure à la dureté du chrome des anneaux 2 et 2'.

Dans le cas du chemisage d'un tube de générateur de vapeur, les anneaux de chrome du manchon de chemisage pénètrent sur une profondeur égale au quart de leur épaisseur dans le tube 3 et sur une profondeur égale aux trois quarts de leur épaisseur dans le manchon 1.

Le sertissage de la partie inférieure 6 du manchon 1 est réalisé par laminage de la paroi de ce manchon contre le tube 3 à l'intérieur de la plaque tubulaire, seul le manchon 1 subissant une déformation plastique.

En revanche, le sertissage du manchon 1 dans sa zone 7 est réalisé par expansion diamètrale du manchon 1 et du tube 3, la déformation du tube 3 restant néanmoins dans le domaine élastique alors que le manchon 1 subit une déformation plastique notable.

Sur la figure 4, on voit l'extrémité inférieur d'un tube 3 de générateur de vapeur sertie dans un trou traversant la plaque tubulaire 4 de ce générateur de vapeur. Un bouchon 10 a été fixé dans l'extrémité de ce tube, à l'intérieur de la plaque tubulaire 4, par le procédé suivant l'invention.

Pour cela, le bouchon 10 constitué par un élément cylindrique creux dont l'extrémité supérieure 10a est fermée est introduit à l'intérieur du tube 3 par la face d'entrée 4a de la plaque tubulaire, après qu'on ait déposé trois anneaux 12 de chrome sur sa partie inférieure 16 légèrement pré-expansée. Comme précédemment, les anneaux de chrome 12 ont une épaisseur comprise entre 0,10 et 0,15 mm légèrement inférieure au jeu radial entre la partie 16 pré-expansée du bouchon et la surface intérieure du tube 3 sertie à l'intérieur de la plaque tubulaire 4. Chacun des anneaux de chrome a une largeur voisine de 4 mm et les anneaux sont séparés par un espace d'une longueur voisine de 4 mm.

On réalise ensuite l'expansion diamètrale de la partie 16 du bouchon 10 jusqu'au moment où les anneaux 12 viennent en prise avec la surface intérieure du tube 3.

On termine la fixation du bouchon à l'intérieur du tube 3 en réalisant un dudgeonnage de la zone 16 à l'intérieur du tube 3 et de la plaque tubulaire 4. Les anneaux de chrome 12 pénètrent, lors de l'opération de dudgeonnage, à la fois dans le tube 3 et dans le manchon 10, pour réaliser un ancrage extrêmement résistant du bouchon dans le tube 3.

Aussi bien dans le cas de la manchette représentée aux figures 2 et 3 que dans le cas du bouchon représenté sur la figure 4, les zones de jonction avec le tube assurent une parfaite étanchéité, si bien qu'il n'est pas nécessaire d'effectuer une soudure complémentaire d'étanchéité à l'extrémité du manchon ou à l'extrémité du bouchon.

Cette étanchéité résulte de l'incrustation des anneaux 2, 2' et 12 dans les parois dont on assure la jonction qui sont venues en contact l'une avec l'autre à la fin du dudgeonnage, les anneaux incrustés dans le métal produisant un effet de chicane pour les fluides situés de part et d'autre de la zone de jonction.

D'autre part, la liaison entre le tube et le manchon ou le bouchon est extrêmement résistante grâce à l'effet d'ancrage des anneaux.

C'est ainsi que des manchons de chemisage fixés à l'intérieur de tubes de générateur de vapeur par le procédé suivant l'invention ont pu supporter, lors d'essais de traction, une charge de 3500 kg sans qu'il y ait d'arrachement.

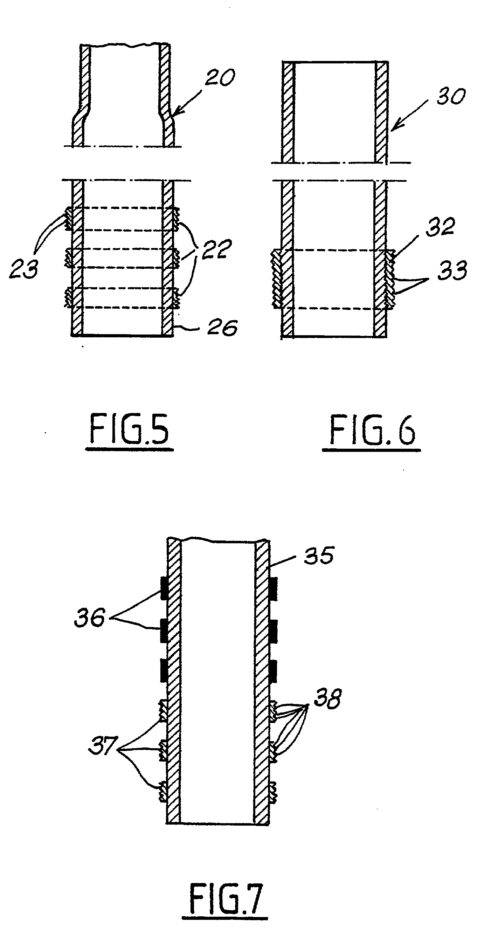

Sur la figure 5, on voit une variante de réalisation d'un élément cylindrique 20 qui peut être un manchon ou un bouchon destiné à un tube de générateur de vapeur comme décrit précédemment. Cet élément 20 comporte une partie d'extrémité 26 pré-expansée destinée à venir dans la partie sertie du tube du générateur de vapeur. Autour de l'élément 20, dans sa partie 26, sont disposées trois bagues 22 en un alliage de nickel d'une dureté supérieure à l'alliage de nickel constituant le tube du générateur de vapeur et l'élément 20. Les bagues 22 comportent des stries 23 en saillie radiale sur leur surface externe et une surface intérieure lisse. Le diamètre intérieur des bagues 22 est tel que les bagues sont en contact avec la surface externe de la partie 26 de l'élément 20 et enfilées légèrement en force sur cet élément. Leur épaisseur est telle que l'élément 20 muni de ses bagues 22 puisse être introduit dans le tube à réparer.

Pour la réparation d'un tube de générateur de vapeur d'un diamètre intérieur légèrement inférieur à 20 mm, on a utilisé un manchon comportant, dans sa partie pré-expansée 26, trois bagues telles que les bagues 22 ayant une hauteur de 5 mm et une épaisseur de 0,25 mm espacées de 5 mm suivant la direction axiale du tube. Les bagues 22 comportent sur leur surface externe des stries d'une profondeur correspondant sensiblement à la moitié de l'épaisseur des bagues 22, soit 0,10 à 0,12 mm. Lors du dudgeonnage du manchon dans le tube, les stries 23 viennent s'incruster dans la paroi intérieure du tube pour assurer une liaison résistante entre le tube et le manchon. L'étanchéité est assurée par l'effet des chicanes successives. La surface lisse intérieure des bagues est sertie contre le manchon dans lequel la bague s'incruste.

Ce mode de réalisation présente l'avantage, par rapport à des anneaux de chrome déposés sur la surface externe du manchon, que les bagues en alliage de nickel sont peu susceptibles de se fissurer pendant le dudgeonnage du manchon. L'étanchéité obtenue est donc supérieure.

Sur la figure 6, on voit une seconde variante de réalisation d'un élément cylindrique 30 qui peut être un bouchon ou un manchon pour le bouchage ou la réparation d'un tube de générateur de vapeur.

L'élément cylindrique 30 n'a pas été pré-expansé et son diamètre extérieur est nettement inférieur au diamètre intérieur du tube.

Une bague 32 est disposée autour de l'élément cylindrique 30 dans la zone de cet élément destinée à subir une expansion et un dudgeonnage dans le tube à boucher ou à réparer.

La bague 32 comporte des stries 33 saillantes radialement, aussi bien sur sa surface externe que sur sa surface interne. La bague 32 est enfilée sur la surface externe de l'élément 30 légèrement en force. Après introduction de l'élément 30 dans le tube, on réalisé directement son dudgeonnage sans effectuer d'expansion hydraulique préalable. Le dudgeonnage a pour effet de réaliser une incrustation des stries 33 d'une part dans le tube du générateur de vapeur et d'autre part dans l'élément 30.

Dans le cas d'un tube de générateur de vapeur dont le diamètre intérieur est un peu inférieur à 20 mm, on utilise une bague 30 d'une hauteur de 15 mm et d'une épaisseur de 0.8 mm, le jeu entre le tube et l'élément 30 étant plus important que dans le cas de l'exemple précédent. L'épaisseur des stries est de 0,10 à 0,12 mm.

L'incrustation des stries 33 assure à la fois l'ancrage et l'étanchéité de l'élément 30, à l'intérieur du tube.

Sur la figure 7, on voit une troisième variante de réalisation d'un élément tubulaire 35 dont le diamètre extérieur initial est inférieur au diamètre intérieur d'un tube d'un générateur de vapeur dans lequel l'élément 35 doit être fixé.

Sur une partie de la surface externe de l'élément 35 on a déposé trois anneaux de chrome 36 comme décrits en se référant à la figure 1. Sur une autre partie de l'élément 35, on a disposé trois bagues successives 37 en alliage de nickel comportant des stries 38 sur leur surface externe, comme décrit en se référant à la figure 5. Les parties de la surface externe de l'élément 35 sur lesquelles sont placées les anneaux 36 et les bagues 37 se trouvent dans une zone pré-expansée de l'élément 36. Après introduction de l'élément tubulaire 35 dans le tube à boucher ou à réparer, on réalise un dudgeonnage de cet élément 35 en deux passes. L'une des passes de dudgeonnage est effectuée dans la zone occupée par les anneaux 36 de l'autre passe, dans la zone où sont disposées les bagues 37. La longueur de chacune des passes de dudgeonnage est d'à peu près 40 mm.

Ce dernier mode de réalisation permet d'obtenir à la fois un très bon ancrage de l'élément 35 dans le tube et une très bonne étanchéité.

Le procédé suivant l'invention est donc extrêmement efficace et facile à mettre en oeuvre et procure une très bonne étanchéité sans qu'il soit nécessaire d'effectuer un soudage de l'élément cylindrique rapporté sur le tube.

L'invention ne se limite pas aux modes de réalisation qui ont été décrits.

On pourra utiliser des anneaux en un matériau quelconque d'une dureté suffisante déposés ou rapportés sur la surface de l'élément tubulaire à fixer dans le tube. Ces anneaux pourront comporter des parties saillantes d'une forme quelconque, pour faciliter leur incrustation dans le métal du tube et de l'élément tubulaire.

On peut utiliser divers procédés pour réaliser le dépôt de matériau dur sur l'élément cylindrique.

De façon préférentielle cependant, on réalise un dépôt continu de chrome par voie électrolytique sur l'extrémité de l'élément cylindrique puis, lorsque l'épaisseur de ce dépôt correspond à l'épaisseur voulue pour les anneaux, on arrête l'électrolyse et l'on usine les anneaux successifs par meulage de la couche de chrome dans les zones annulaires de séparation entre les anneaux.

On pourrait également réaliser le dépôt de chrome dans des zones discontinues successives, par exemple en plaçant des caches sur les partie intermédiaires de séparation entre les zones annulaires à revêtir.

On peut réaliser le dépôt de chrome autrement que par électrolyse et par exemple par dépôt chimique.

Au lieu de chrome on peut déposer sur l'élément cylindrique un autre métal dur tel que le tungstène.

On pourrait également déposer des alliages dur tels que ceux qui sont vendus sous le nom de Stellite. Ces alliages doivent cependant être déposés à chaud, par exemple au chalumeau et cette technique présente des inconvénients par rapport à un dépôt à froid tel qu'une électrolyse.

On pourrait également utiliser un métal dur tel que le carbure de tungstène dans une matrice de cobalt. Bien que l'utilisation de trois anneaux successifs, comme dans les exemples de réalisation qui ont été décrits, soit particulièrement satisfaisante, on peut utiliser un nombre d'anneaux de matériau dur supérieur à trois ou uniquement deux anneaux dans chacune des zones de junction, suivant l'étanchéité et la résistance qu'on veut obtenir pour la jonction.

L'épaisseur des anneaux est généralement déterminée par le jeu initial entre le tube et l'élément cylindrique qu'on fixe dans ce tube, cette épaisseur devant permettre une introduction et une mise en place sans difficulté de l'élément cylindrique dans le tube.

La largeur des anneaux est déterminée, en fonction du nombre d'anneaux, par la résistance et l'étanchéité recherchée.

Le procédé de fixation s'applique aussi bien dans le cas du chemisage de tubes de générateur de vapeur avec un manchon d'une longueur supérieure à l'épaisseur de la plaque tubulaire que dans le cas du chemisage avec un manchon court applicable de préférence aux tubes périphériques ; le sertissage de la zone inférieure du manchon avec incrustation des anneaux de matériau dur a lieu dans une zone située à l'intérieur de la plaque tubulaire et éloignée de la face d'entrée de cette plaque, dans le cas du manchonnage court.

Enfin, le procédé de fixation suivant l'invention s'applique non seulement au bouchage et au chemisage de tubes de générateur de vapeur mais encore à toute fixation de pièces cylindriques creuses à l'intérieur d'un tube, lorsqu'on recherche une très grande résistance et une très bonne étanchéité des zones de jonction.

## Revendications

1.- Procédé de fixation résistante et étanche d'un élément tubulaire (1, 10, 20, 30, 35) à l'intérieur d'un tube (3) par expansion diamétrale et sertissage de l'élément tubulaire (1, 10, 20, 30, 35) dans le tube (3), et incrustation dans le tube et l'élément cylindrique au niveau de leur zone de jonction d'au moins un élément en matériau dur intercalé entre le tube et l'élément cylindrique, caractérisé par le fait qu'on dispose, autour de l'élément cylindrique (1, 10, 20, 30, 35) dont le diamètre extérieur initial est inférieur au diamètre intérieur du tube et en contact avec sa surface externe, au moins un anneau en un matériau dont la dureté est supérieure à la dureté du tube (3) et à celle de l'élément cylindrique (1), ayant une épaisseur inférieure à la différence entre le rayon intérieur du tube (3) et et rayon extérieur initial de l'élément cylindrique (1, 10, 20, 30, 35),
- qu'on introduit, l'élément cylindrique (1, 10, 20, 30, 35) muni de l'anneau en matériau dur à l'intérieur du tube (3) de façon que l'anneau en matériau dur (2, 2', 12, 22, 32, 36, 37) soit placé dans une partie du tube (3) dans laquelle on réalise la fixation de l'élément cylindrique,
- et qu'on réalise l'expansion puis le sertissage de l'élément cylindrique (1, 10, 20, 30, 35), au moins dans sa partie comportant l'anneau en matériau dur (2, 2', 12), de façon à incruster l'anneau en matériau dur (2, 2', 12, 22, 32, 36, 37), à la fois dans l'élément cylindrique et le tube (3).

2.- Procédé de fixation suivant la revendication 1, caractérisé par le fait qu'on dépose sur la surface externe de l'élément cylindrique (1, 10) un matériau dur, dans au moins deux zones de forme annulaire, de façon à constituer deux anneaux en matériau dur (2, 2', 12) entourant l'élément cylindrique (1, 10) avant d'introduire l'élément cylindrique (1, 10) dans le tube (3).

3.- Procédé de fixation suivant la revendication 2, caractérisé par le fait que le matériau de revêtement des zones annulaires (2, 2', 12) est constitué par du chrome.

4.- Procédé de fixation suivant l'une quelconque des revendications 2 et 3, caractérisé par le fait qu'on dépose le matériau de revêtement dans une zone continue de la surface externe de l'élément cylindrique (1, 10) puis qu'on usine cette couche continue de matériau de revêtement, suivant plusieurs zones annulaires de séparation, pour constituer des anneaux successifs (2, 2', 12) de matériau de revêtement sur la surface externe de l'élément cylindrique (1, 10).

5.- Procédé de fixation suivant la revendication 4, caractérisé par le fait que le dépôt de matériau de revêtement est réalisé par électrolyse.

6.- Procédé de fixation suivant l'une quelconque des revendications 2 à 5, caractérisé par le fait que le matériau de revêtement est déposé dans trois zones annulaires successives, pour constituer trois anneaux (2, 2', 12) dans chacune des zones de jonction entre l'élément cylindrique (1, 10) et le tube (3).

7.- Procédé de fixation suivant l'une quelconque des revendications 2 à 6, caractérisé par le fait que les anneaux (2, 2', 12) de matériau de revêtement ont une épaisseur comprise entre 0,10 et 0,15 mm.

8.- Procédé de fixation selon la revendication 1, caractérisé en ce qu'au moins une bague (22, 32, 37) en matériau d'une dureté supérieure à la dureté du tube (3) et de l'élément cylindrique (20, 30, 35) est enfilée sur l'élément cylindrique, avant son introduction dans le tube.

9.- Procédé de fixation suivant la revendication 8, caractérisé en ce que la ou les bagues (21, 32, 37) comportent des stries (23, 33, 38) saillantes dans la direction radiale, sur sa (leur) surface externe.

10.- Procédé de fixation suivant la revendication 8, caractérisé en ce que la bague (32) comporte des stries (33) saillantes dans la direction radiale, aussi bien sur sa surface externe que sur sa surface interne.

11.- Procédé selon la revendication 9, caractérisé en ce que trois bagues (22) espacées axialement les unes des autres sont disposées autour de l'élément cylindrique (20, 30).

12.- Procédé selon la revendication 11, caractérisé en ce que chacune des bagues (22) a une hauteur d'environ 5 mm, une épaisseur d'environ 0,25 mm et comporte des stries (23) d'une épaisseur comprise ente 0,10 et 0,12 mm.

13.- Procédé selon la revendication 10, caractérisé par le fait que la bague (32) a une hauteur voisine de 25 mm, une épaisseur voisine de 0,8 mm et comporte des stries (33) en saillie radiale de 0,10 à 0,12 mm.

14.- Procédé selon la revendication 1, caractérisé par le fait qu'on réalise au moins deux anneaux (36) sur l'élément cylindrique (35) par dépôt de matériau dur et qu'on enfile également au moins une bague (37) sur cet élément cylindrique avant son introduction dans le tube.

15.- Procédé de fixation suivant la revendication 1, dans le cas où le tube (3) est un tube de générateur de vapeur et l'élément cylindrique (1) un manchon de chemisage de ce tube, caractérisé par le fait qu'au moins deux anneaux successifs (2, 2') sont disposés autour de chacune des extrémités du manchon (1) avant qu'il ne soit introduit dans le tube (3) du générateur de vapeur, de façon qu'une des parties d'extrémité (6) du manchon (1) soit à l'intérieur du tube (3) dans sa partie sertie dans la plaque tubulaire (4) et l'autre partie d'extrémité (7) du manchon à l'intérieur du tube (3) dans sa partie extérieure à la plaque tubulaire (4).

16.- Procédé de fixation suivant la revendication 1, dans le cas où le tube (3) est un tube de générateur de vapeur et l'élément cylindrique (1) un bouchon pour la fermeture étanche de ce tube (3), caractérisé par le fait qu'au moins deux anneaux successifs (12), sont disposés autour d'une partie d'extrémité (16) du bouchon (10), cette partie (16) du bouchon (10) étant introduite dans la partie du tube (3) sertie à l'intérieur de la plaque tubulaire (4) du générateur de vapeur.

17.- Elément cylindrique creux pour la réalisation du procédé selon l'une quelqconque des revendications 1 à 16, caractérisé par le fait qu'il comporte, autour de sa surface externe et en contact avec cette surface, au moins un anneau (2, 22, 32) en un matériau d'une dureté supérieure à la dureté du matériau de l'élément cylindrique, saillant dans la direction radiale.

18.- Elément cylindrique suivant la revendication 17, caractérisé par le fait qu'il comporte, sur sa surface externe, dans au moins deux zones de forme annulaire, un matériau de revêtement d'une dureté supérieure à la dureté de l'élément cylindrique (1, 10), constituant au moins deux anneaux (2, 2', 12) saillant par rapport à la surface extérieure de l'élément cylindrique (1, 10).

19.- Elément cylindrique suivant la revendication 17, caractérisé par le fait qu'il constitue un manchon tubulaire ouvert à ses deux extrémités, comportant, sur sa surface externe, dans chacune de ses deux zones d'extrémité, au moins un anneau en matériau dur.

20.- Elément cylindrique suivant la revendication 17, caractérisé par le fait qu'il constitue un bouchon creux (10) fermé à l'une de ses extrémités (10a) et comportant, sur sa surface externe, dans sa zone d'extrémité (16) opposée à son extrémité fermée, au moins un anneau en matériau dur.

**Patentansprüche**

1. Verfahren zur beständigen und dichten Befestigung eines rohrförmigen Elements (1, 10, 20, 30, 35) im Inneren eines Rohres (3) durch Durchmesserausdehnung und Quetschverbindung des rohrförmigen Elements (1, 10, 20, 30, 35) im Rohr (3) und Eindrücken wenigstens eines Elements aus hartem Material, das zwischen dem Rohr und dem Element eingefügt ist, in das Rohr und das zylindrische Element auf der Höhe ihrer Verbindungszone, dadurch gekennzeichnet, daß man um das zylindrische Element (1, 10, 20, 30, 35) herum, dessen anfänglicher Außendurchmesser kleiner als der Innendurchmesser des Rohres ist, und im Kontakt mit seiner Außenoberfläche wenigstens einen Ring aus einem Material, dessen Härte höher als die Härte des Rohres (3) und die des zylindrischen Elements (1) ist, mit einer Dicke anordnet, die kleiner als der Unterschied zwischen dem Innenradius des Rohres (3) und dem anfänglichen Außenradius des zylindrischen Elements (1, 10, 20, 30, 35) ist, daß man das mit dem Ring aus hartem Material versehene, zylindrische Element (1, 10, 20, 30, 35) in das Innere des Rohres (3) derart einführt, daß der Ring (2, 2', 12, 22, 36, 37) in einem Teil des Rohres, in dem man die Befestigung des zylindrischen Elements vornimmt, angeordnet wird, und daß man die Ausdehnung und dann die Quetschverbindung des zylindrischen Elements (1, 10, 20, 30, 35) wenigstens in seinem den Ring (2, 2', 12) aus hartem Material aufweisenden Teil derart bewirkt, daß der Ring (2, 2', 12, 22, 32, 36, 37) aus hartem Material gleichzeitig in das zylindrische Element und das Rohr (3) eingedrückt wird.

2. Befestigungsverfahren nach dem Anspruch 1, dadurch gekennzeichnet, daß man auf der Außenoberfläche des zylindrischen Elements (1, 10) ein hartes Material in wenigstens zwei Zonen von Ringform, derart abscheidet, um zwei Ringe (2, 2', 12) aus hartem Material, die das zylindrische Element (1, 10) umgeben, zu bilden, bevor man das zylindrische Element (1, 10) in das Rohr (3) einführt.

3. Befestigungsverfahren nach dem Anspruch 2, dadurch gekennzeichnet, daß das Beschichtungsmaterial der ringförmigen Zonen (2, 2', 12) aus Chrom gebildet wird.

4. Befestigungsverfahren nach irgendeinem der Ansprüche 2 und 3, dadurch gekennzeichnet, daß man das Beschichtungsmaterial in einer zusammenhängenden Zone der Außenoberfläche des zylindrischen Elements (1, 10) abscheidet und man dann diese zusammenhängende Beschichtungsmaterialschicht entsprechend mehreren ringförmigen Trennungszonen bearbeitet, um aufeinanderfolgende Beschichtungsmaterialringe (2, 2', 12) auf der Außenoberfläche des zylindrischen Elements (1, 10) zu bilden.

5. Befestigungsverfahren nach dem Anspruch 4, dadurch gekennzeichnet, daß die Beschichtungsmaterialabscheidung durch Elektrolyse vorgenommen wird.

6. Befestigungsverfahren nach irgendeinem der Ansprüche 2 bis 5, dadurch gekennzeichnet, daß das Beschichtungsmaterial in drei aufeinanderfolgenden ringförmigen Zonen abgeschieden wird, um drei Ringe (2, 2', 12) in jeder der Verbindungszonen zwischen dem zylindrischen Element (1, 10) und dem Rohr (3) zu bilden.

7. Befestigungsverfahren nach irgendeinem der Ansprüche 2 bis 6, dadurch gekennzeichnet, daß die Beschichtungsmaterialringe (2, 2', 12) eine Dicke im Bereich von 0,10 bis 0,15 mm haben.

8. Befestigungsverfahren nach dem Anspruch 1, dadurch gekennzeichnet, daß wenigstens ein Paßring (22, 32, 37) aus einem Material höherer Härte als die Härte des Rohres (3) und des zylindrischen Elements (20, 30, 35) auf das zylindrische Element vor dessen Einführung in das Rohr aufgeschoben wird.

9. Befestigungsverfahren nach dem Anspruch 8, dadurch gekennzeichnet, daß der oder die Paßringe (22, 32, 37) in der Radialrichtung vorragende Riefen (23, 33, 38) auf seiner (ihrer) Außenoberfläche aufweisen.

10. Befestigungsverfahren nach dem Anspruch 8, dadurch gekennzeichnet, daß der Paßring (32) in der Radialrichtung vorragende Riefen (33) sowohl auf seiner Außenoberfläche als auch auf seiner Innenoberfläche aufweist.

11. Verfahren nach dem Anspruch 9, dadurch gekennzeichnet, daß drei axial untereinander beabstandete Paßringe (22) um das zylindrische Element (20, 30) angeordnet werden.

12. Verfahren nach dem Anspruch 11, dadurch gekennzeichnet, daß jeder der Paßringe (22) eine Höhe von etwa 5 mm, eine Dicke von etwa 0,25 mm hat und Riefen (23) einer Dicke im Bereich von 0,10 bis 0,12 mm aufweist.

13. Verfahren nach dem Anspruch 10, dadurch gekennzeichnet, daß der Paßring (32) eine Höhe nahe 25 mm, eine Dicke nahe 0,8 mm hat und radial vorragende Riefen (33) von 0, 10 bis 0,12 mm aufweist.

14. Verfahren nach dem Anspruch 1, dadurch gekennzeichnet, daß man wenigstens zwei Ringe (36) auf dem zylindrischen Element (35) durch Abscheidung von hartem Material herstellt und daß man außerdem wenigstens einen Paßring (37) auf dieses zylindrische Element vor seiner Einführung in das Rohr aufschiebt.

15. Befestigungsverfahren nach dem Anspruch 1 im Fall, wo das Rohr (3) ein Dampferzeugerrohr ist und das zylindrische Element (1) eine Hüllmuffe dieses Rohres ist, dadurch gekennzeichnet, daß wenigstens zwei aufeinanderfolgende Ringe (2, 2') um jedes der Enden der Muffe (1) herum, bevor sie in das Rohr (3) des Dampferzeugers eingeführt wird, derart angeordnet werden, daß einer der Endteile (6) der Muffe (1) im Inneren des Rohres (3) in seinem in der Rohrplatte (4) eingeklemmten Teil ist und der andere Endteil (7) der Muffe im Inneren des Rohres (3) in seinem Teil außerhalb der Rohrplatte (4) ist.

16. Befestigungsverfahren nach dem Anspruch 1 im Fall, wo das Rohr (3) ein Dampferzeugerrohr ist und das zylindrische Element (1) ein Stopfen zum dichten Verschluß dieses Rohres (3) ist, dadurch gekennzeichnet, daß wenigstens zwei aufeinanderfolgende Ringe (12) um einen Endteil (16) des Stopfens (10) herum angeordnet werden, welcher Teil (16) des Stopfens (10) in den im Inneren der Rohrplatte (4) des Dampferzeugers eingeklemmten Teil des Rohres (3) eingeführt wird.

17. Hohlzylindrisches Element zur Durchführung des Verfahrens nach irgendeinem der Ansprüche 1 bis 16, dadurch gekennzeichnet, daß es um seine Außenoberfläche herum und im Kontakt mit dieser Oberfläche wenigstens einen Ring (2, 22, 32) aus einem Material einer höheren Härte als der Härte des Materials des zylindrischen Elements aufweist, der in der Radialrichtung vorragt.

18. Zylindrisches Element nach dem Anspruch 17, dadurch gekennzeichnet, daß es auf seiner Außenoberfläche in wenigstens zwei Zonen von Ringform ein Beschichtungsmaterial einer höheren Härte als der Härte des zylindrischen Elements (1, 10) aufweist, die wenigstens zwei bezüglich der Außenoberfläche des zylindrischen Elements (1, 10) vorragende Ringe (2, 2', 12) bilden.

19. Zylindrisches Element nach dem Anspruch 17, dadurch gekennzeichnet, daß es eine rohrförmige, an ihren beiden Enden offene Muffe darstellt, die an ihrer Außenoberfläche in jeder ihrer beiden Endzonen wenigstens einen Ring aus hartem Material aufweist.

20. Zylindrisches Element nach dem Anspruch 17, dadurch gekennzeichnet, daß es einen hohlen Stopfen (10) darstellt, der an einem seiner Enden (10a) geschlossen ist und auf seiner Außenoberfläche in seiner seinem geschlossenen Ende entgegengesetzten Endzone (16) wenigstens einen Ring aus hartem Material aufweist.

**Claims**

1. Process for the strong and leak-tight fixing of a tubular element (1, 10, 20, 30, 35) inside a tube (3) by diametric expansion and crimping of the tubular element (1, 10, 20, 30, 35) in the tube (3) and inlaying in the tube and the cylindrical element at their zone of connection to at least one element of hard material interposed between the tube and the cylindrical element, characterised in that, around the cylindrical element (1, 10, 20, 30, 35) the initial outer diameter of which is less than the internal diameter of the tube, in contact with the outer surface thereof is placed at least one ring consisting of a material the hardness of which is greater than the hardness of the tube (3) and that of the cylindrical element (1), having a thickness which is less than the difference between the internal radius of the tube (3) and the initial outer radius of the cylindrical element (1, 10, 20, 30, 35), the cylindrical element (1, 10, 20, 30, 35) provided with the ring of hard material is introduced into the tube (3) so that the ring of hard material (2, 2', 12, 22, 32, 36, 37) is located in a part of the tube (3) in which the cylindrical element is fixed, and that the expansion is carried out followed by the crimping of the cylindrical element (1, 10, 20, 30, 35), at least in that part comprising the ring of hard material (2, 2', 12) so as to inlay the ring of hard material (2, 2', 12, 22, 32, 36, 37) both in the cylindrical element and in the tube (3).

2. Method of fixing according to claim 1, characterised in that a hard material is deposited on the outer surface of the cylindrical element (1, 10) in at least two zones of annular shape, so as to form two rings of hard material (2, 2', 12) surrounding the cylindrical element (1, 10) before the cylindrical element (1, 10) is introduced into the tube (3).

3. Method of fixing according to claim 2, characterised in that the coating material of the annular zones (2, 2', 12) consists of chromium.

4. Method of fixing according to one of claims 2 and 3, characterised in that the coating material is deposited in a continuous zone on the outer surface of the cylindrical element (1, 10), then this continuous layer of coating material is machined, in a plurality of annular separating zones, to form successive rings (2, 2', 12) of coating material on the outer surface of the cylindrical element (1, 10).

5. Method of fixing according to claim 4, characterised in that the deposit of coating material is produced by electrolysis.

6. Method of fixing according to one of claims 2 to 5, characterised in that the coating material is deposited in three successive annular zones, to form three rings (2, 2', 12) in each of the junction zones between the cylindrical element (1, 10) and the tube (3).

7. Method of fixing according to any one of claims 2 to 6, characterised in that the rings (2, 2', 12) of coating material have a thickness in the range between 0.10 and 0.15 mm.

8. Method of fixing according to claim 1, characterised in that at least one ring (22, 32, 37) of material having a hardness greater than that of the tube (3) and cylindrical element (20, 30, 35) is threaded over the cylindrical element before it is introduced into the tube.

9. Method fixing according to claim 8, characterised in that the or each ring (21, 32, 37) comprises or comprise striations (23, 33, 38) projecting radially, over the outer surface of said ring or rings.

10. Method of fixing according to claim 8, characterised in that the ring (32) comprises striations (33) projecting in the radial direction on both the outer and inner surfaces.

11. Method according to claim 9, characterised in that three rings (22) spaced axially from one another are arranged around the cylindrical element (20, 30).

12. Method according to claim 11, characterised in that each of the rings (22) is about 5 mm high, about 0.25 mm thick and has striations (23) between 0.10 and 0.12 mm thick.

13. Method according to claim 10, characterised in that the ring (32) is around 25 mm high, around 0.8 mm thick and has radially projecting striations (33) of between 0.10 and 0.12 mm.

14. Method according to claim 1, characterised in that at least two rings (36) are formed on the cylindrical element (35) by depositing hard material and also at least one ring (37) is threaded on to said cylindrical element before it is introduced into the tube.

15. Method of fixing according to claim 1, in cases where the tube (3) is a steam generating tube and the cylindrical element (1) is a sleeve fitting around said tube, characterised in that at least two successive rings (2, 2') are arranged around each end of the sleeve (1) before it is introduced into the tube (3) of the steam generator, so that one of the end portions (6) of the sleeve (1) is inside the tube (3) in the part thereof which is crimped in the tube plate (4) and the other end portion (7) of the sleeve is inside the tube (3) in the portion outside the tube plate (4).

16. Method of fixing according to claim 1, in cases where the tube (3) is a steam generator tube and the cylindrical element (1) is a stopper for producing a leak-tight closure for this tube (3), characterised in that at least two successive rings (12) are arranged around one end portion (16) of the stopper (10), this portion (16) of the stopper (10) being introduced into the part of the tube (3) crimped inside the tube plate (4) of the steam generator.

17. Hollow cylindrical element for carrying out the process according to any one of claims 1 to 16, caracterised in that it comprises, around its outer surface and in contact with said surface, at least one ring (2, 22, 32) of a material the hardness of which is greater than the hardness of the material of the cylindrical element, projecting in the radial direction.

18. Cylindrical element according to claim 17, characterised in that it comprises, on its outer surface, in at least two annular zones, a coating material the hardness of which is greater than the hardness of the cylindrical element (1, 10) constituting at least two rings (2, 2', 12) projecting relative to the outer surface of the cylindrical element (1, 10).

19. Cylindrical element according to claim 17, characterised in that it constitutes a tubular sleeve open at both ends and comprising, on its outer surface, in each of its two end zones, at least one ring of hard material.

20. Cylindrical element according to claim 17, characterised in that it constitutes a hollow stopper (10) closed at one end (10a) and comprising on its outer surface, in the end zone (16) thereof opposite' its closed end, at least one ring of hard material.

FIG.1

FIG.2

FIG.3

FIG.4

EP 0 248 728 B1

FIG.5          FIG.6

FIG.7